# EUROPEAN PATENT APPLICATION

(11) **EP 4 803 871 A1**
(43) Date of publication of application: **09.09.2026**
(21) Application number: 25161328.7
(22) Date of filing: 03.03.2025
(51) Int. Cl.: G01L 1/20, G01L 1/26, G01L 5/22

(54) **TOUCH COVER FOR SOFT FORCE SENSORS**

(71) Applicant: Melexis Technologies SA, 2022 Bevaix (CH)
(72) Inventor: CANIONCQ, Julien, 2022 Bevaix (CH); LE SIGNOR, Théo, 2022 Bevaix (CH); DUPRÉ, Nicolas, 2022 Bevaix (CH)
(74) Representative: Bardehle Pagenberg Partnerschaft mbB Patentanwälte Rechtsanwälte

(57) **Abstract**

A soft sensor for measuring a force is described, the soft sensor comprising at least one soft sensor element (100), each of the at least one the soft sensor elements (100) comprising a sensor (110), a deformable element (120), wherein the deformable element (120) is deformable by the force, at least one element (130) for reacting with the sensor (110) for measuring the force by a deformation of the deformable element (120), wherein the deformable element (120) extends at least partially between the sensor (110) and the at least one element (130); and the soft sensor further comprising a cover (220, 220a) having two opposing sides, wherein a first side of the two opposing sides comprises a contact portion to which the force is to be applied and a second side of the two opposing sides is connected to a portion of the deformable elements (120) of each of the at least one soft sensor element (100), wherein there is a gap (250) between the second side of the cover (220, 220a) and the sensors (110) of the at least one soft sensor element (100) when no force is applied. Further, a robotic, which comprises the soft sensor, is described.

## Description

### TECHNICAL FIELD

The invention of the current application relates to a soft sensor for measuring a force.

### BACKGROUND

A force sensor returns an electronic signal proportional to the mechanical force applied to the sensor. It can also be said that a force sensor converts the magnitude of applied force into a related electronic signal. The forces measured can be mechanical quantities such as tension, pressure, weight, torque, strain, and interior stress. Force sensors have become indispensable core components of power equipment, engineering machinery, various working machines, and industrial automation systems.

Nowadays force sensors have a wide field of application from the automotive industry to the medical sector.

For example, using existing force sensors, the forces applied to workpieces during an automatized manufacturing process can be measured in real time to control the force exerted upon the workpiece. In this way, the force-load of the workpieces can be controlled, and potentially limited, during the manufacturing process. This is in particular important when the workpiece is sensible.

However, measuring a force can also be important when the stiffness of an object shall be determined, since stiffness is defined as the extent to which an object resists deformation in response to an applied force.

Often times, the force sensors are used together with multi-axis robotic devices to move, position, hold, or sense objects. A multi-axis robotic device may, for example, include a robotic finger or a gripper. A robotic finger is like a humanoid finger but can be moveable in more directions. At the tip of the finger a force sensor can be applied, which allows to sense an object. A gripper is a mechatronic device, which exerts a force and a corresponding counterforce onto an object. Thereby, the force and the counterforce press the object against respective parts of the gripper such that the object and the respective gripper parts come into contact.

However, the sensors used in the prior art suffer from the disadvantage that the force applied to the object is not measured with sufficient accuracy. Reasons for inaccurate measurements may, for example, be forces that do not act in a normal direction on the detection surface of the sensor but create a torque. Applying a torque to force sensors may not only lead to inaccurate measurements but could also lead to damage. This, in turn, may ultimately cause a damage to the object, by either excising too much force or too less force or grip loss. This needs to be prevented and therefore precise force measurements are necessary.

### SUMMARY

The abovementioned needs are addressed by a soft sensor for measuring a force according to the invention. The soft sensor according to the invention comprises at least one soft sensor element and a cover.

The soft sensor element according to the invention comprises a sensor, a deformable element, and a at least one element for reacting with the sensor.

The sensor may be an integrated circuit, a semiconductor die, a bare die, a packaged or unpackaged chip, or a packaged or unpackaged integrated circuit. The sensor may be enclosed by the deformable element that may thereby provide passivation and encapsulation of the sensor, which avoids a need for using any lead frame or overmolding of the sensor. This allows the soft sensor to be flexible and to be formed in different shapes. The element for reacting with the sensor may consist of a single element or a plurality of elements. The plurality of elements may comprise similarly shaped and/or similarly sized elements or differently shaped and sized elements. The element for reacting with the sensor may be embedded in the deformable element. Thereby, the element for reacting with the sensor may be partially or fully embedded in the deformable element. It can also be said that the material of the deformable element at least partially or fully surrounds the element for reacting with the sensor.

The deformable element may be deformable and may extend at least partially between the sensor and the element. Thereby, the deformable element may also comprise one or more pockets which form a kind of free space, into which no material of the deformable element extends. This free space may be filled with air, the surrounding media or an inert gas. The pockets still form part of the deformable element, such that the deformable element still extends between the element and the sensor, even if free space is between the element and the sensor. In such an arrangement, it can also be said that the element and/or the sensor may partially or fully extent into the free space of the deformable element. It can also be said that the element is partially embedded or attached to a wall of the formed pocket. In some embodiments, the deformable element may comprise one or more vent holes for pressure equalization between the inside and the outside of the one or more pockets. A vent hole in the sense of this disclosure may therefore be an opening in the deformable element that connects one of the pockets with the outside of the pocket. Alternatively, the pressure in the pocket may be increased or decreased by pressure means. The increase and decrease of the pressure in the pocket allows to adjust the ability of the deformable element to be deformed. Thereby, it is possible to measure the different forces with the same sensor element without the danger that the sensor element is damaged by high forces.

An element is deformable when it undergoes a change of shape and/or volume, when an external force acts onto the element. Preferably, deformable means that the deformable element undergoes an elastic deformation, i.e. it returns to its original shape and/or volume once the external force does no longer act upon the element. The deformable element may be an elastic element and may comprise an elastomer. In some cases, the elastomer may be a biocompatible elastomer, which allows the soft sensor to be used in medical applications. In some cases, the deformable element may form pockets into which the deformable element may extend when it is deformed by the external force. For example, when an external force causes a substantial deformation of the deformable element, a portion of the deformable element may be displaced by the force and can extend into one of the pockets. Thereby, a pocket is a hollow space into which material of the deformable element can extend when being deformed. The formation of pockets has not only the advantage of allowing the deformable element to extend therein, but also can be used to give some stability to the deformable element.

Furthermore, when there is no package around each chip, the deformable element can provide both the ability for the element to move to a certain extent and change its position when a force is applied, but also can encapsulate and possible electrically isolate the sensor, respectively the sensor chip, such that no packaging of the sensor chip is necessary, which makes it possible to have a very thin soft sensor, which is also in itself flexible. A further advantage is that the sensor chips of the different soft sensor elements can be arranged closer to one other if there is no package around each chip, which inherently increases the spatial resolution of the soft sensor.

Since the deformable element extends at least partially between the sensor and the element or even surrounds the element, it holds the element in a particular position with respect to the sensor. This position may be defined as a first position of the element with respect to the sensor. It can also be said that the deformable element holds the element in a particular distance from the sensor. If the deformable element is deformed, the element as such performs a coaligned movement in the direction of deformation of the deformable element. If the deformation is a compression, then the distance of the element to the sensor is decreased, whereas if the deformation is a tension, then the distance is increased.

Deformation of the deformable element means that at least one spatial extension of the deformable element is changed in at least one respective spatial dimension. As such, the deformable element of the sensor arrangement may be soft in the sense that is it deformable. The deformability and in particular how much the deformable element can be deformed depends upon the material used for the deformable element. For example, the deformable element can be made of a flexible material. A flexible material is a material which returns to its initial shape once the external force is released. Hence, the deformable element may return to its initial shape if any external force is released. Therefore, the deformable element may also be called a flexible element or an elastic element. In another example, the deformable element may be an elastomer. An elastomer is typically made of monomers linked by weak intermolecular forces. Due to the weak intermolecular forces of the chemical elements of the elastomer, conformational changes of the compounds are possible without or with only partially breaking covalent bonds.

This results in that an elastomer may be both viscous and elastic at the same time. Therefore, an elastomer may be deformed by an external force.

The deformation of the deformable element causes the element for reacting with the sensor to move to a second position different to the first position. If the deformable element is compressed, then the second position of the element is closer to the sensor than the first position of the element. If a tension force is applied, then the second position of the element is further away from the sensor than the first position. The change of position can be detected by the sensor of the sensor arrangement by reacting with the element. When reacting with the sensor, the element influences the measurement of the sensor. It could also be said that the element couples with the sensor through a physical effect, which is characteristic of the sensor and the element. This coupling of the element with the sensor depends on the position of the element with respect to the sensor. It could also be said that through the position-dependent coupling, the measurement of the sensor is a unique function of the position of the element with respect to the sensor. In this sense it can be said that the sensor as used in the soft sensor element is a distance measuring sensor. Such a sensor returns an electronic signal proportional to the position of the element with respect to the sensor.

If no external force is applied to the soft sensor element, the deformable element is not deformed and the element is located at the first position with respect to the sensor. Hence, a first signal can be measured by the sensor, which corresponds to a zero-force measurement. If a finite external force is applied to the element, the deformable element is deformed, and the element moves to the second position different from the first position. This second position of the element with respect to the sensor leads to a second signal of the sensor, which corresponds to the applied external force. Hence, the spatial difference between the first and the second position can uniquely be mapped to the respective applied external forces. The spatial difference encompasses any axial and/or rotational differences between the two positions. The spatial difference can also be referred to as displacement of the element. The mapping can be done using a non-linear model, since the force may not be proportional to the displacement of the element but follow a non-linear function. Since a change of the interaction of the element with the sensor can be measured with high accuracy, a high accuracy measurement, derivation, calculation, or estimation of the applied force can be undertaken. In other words, an alteration of the influence of the element on the sensor allows to infer the external stimulus leading to the alteration, namely the applied external force. For example, as described above, the sensor may be sensitive to the displacement of the element with respect to the sensor.

A soft sensor element may use a magnetic field for measuring changes in the position of the element for reacting with the sensor. The magnetic field may be a magnetic field caused by a permanent magnet (e.g. the element for reacting with the sensor may be a permanent magnet) or it may be a magnetic field that is induced by changes of an electrical field (e.g. the sensor may generate a magnetic field that couples with the element for reacting with the sensor (e.g. by generating of eddy currents in said element)).

Although described here as one single sensor element, it is also contemplated that the soft sensor comprises a plurality of soft sensor elements, wherein a plurality as used throughout this disclosure includes any number of two or more elements. The plurality of soft sensor elements may be arranged in form of an array, i.e. in a regular or grid-like manner with essentially equal distances between the soft sensor elements, or in a regular or unregular pattern or even arbitrarily.

The cover of the soft sensor has at least two opposing sides. A first side of the two opposing sides comprises a contact portion to which the force is to be applied. For example, when the soft sensor is used in a robotic gripper, the contact portion may be the portion of the soft sensor that is brought into contact with an object that is to be gripped by the robotic gripper and the soft sensor may measure the force of the grip. Further, a second side of the two opposing sides is connected to a portion of the deformable element of the at least one soft sensor element. The cover may be rigid or may be deformable. The cover may be connected to the deformable element of the at least one soft sensor element in a removable or non-removeable manner. When the cover is removable connected to the deformable element of the at least one soft sensor element it can be exchanged with another cover, for example when the cover is worn out or other forces want to be measured. In the latter case the cover can be made out of a softer material for measuring lower forces or harder material for measuring higher forces. Thereby, the hardness of the material defines by how much the material can be deformed. For a removeable connection between the cover and the deformable element of the at least one soft sensor element, the cover and the deformable element of the at least one soft sensor element may comprise means, which interact in a way that a releasable connection, i.e. a reversable connection, is formed. Such a cover may also be called removable cover. The connection in this case is released when sufficient force is exerted on either the cover or the sensor element, when the cover and the at least one sensor element are pulled apart from one another. A non-removable cover is fixed to the deformable element of the at least one soft sensor element. In this case the connection is not reversable, i.e. can only be reversed if the connection is destroyed.

According to the invention, a gap is formed between the second side of the cover and the sensor of the at least one soft sensor element when no force is applied. In some embodiments, the sensor of the at least one soft sensor element may be located on a support. In such a case, the gap may be present between the cover and the support. This may in particular be the case if the deformable element encompasses the respective sensor in a lateral direction.

During operation, an object exerts a force onto the cover. Technically, the case that the soft sensor is pressed against an object such that the soft sensor exerts a force on the object is also encompassed, but in this disclosure it will not be distinguished between both cases since in both cases the force is amount wise the same, but is only directed in two opposing directions.

The soft sensor according to the invention is capable of measuring a force. When a force is applied to the contact portion of the cover of the soft sensor, the cover is pushed towards the sensor (or the support, if present). This change in position causes a deformation of the deformable element of the at least one soft sensor element, since the deformable element is connected to the second side of the cover, thus relating to a change in position of the element for reacting with the sensor of the at least one soft sensor element and the measurement of the applied force.

The gap formed between the cover and the sensor (or the support) improves accuracy of the soft sensor when measuring a force by allowing measurement of small forces. Thereby, if the cover itself is deformable, the force measurement may have two stages, a first stage in which mainly the deformable element of the at least one soft sensor element is deformed - which may be the case for small forces or during the initial measurement of larger forces - and a second stage in which the cover has been pushed so far towards the sensor that the position change of the cover caused a closing of the gap and the cover contacts the sensor. In this second stage, which may occur when larger forces are applied, the cover itself may be deformed, which leads to a further deformation of the deformable element that is connected with the second side of the cover and thus to a further change in the measured force by a position change of the element for reacting with the sensor.

Another benefit of the cover according to the invention becomes apparent if the soft sensor for measuring the force comprises two or more soft sensor elements. In this case, the two or more soft sensor elements are - via their respective deformable elements - each connected to the second side of the same cover. In consequence, the lateral deformation of the deformable elements is limited because of their connection to the cover. In other words, the cover provides a structural support for the deformable elements of the soft sensor elements of the soft sensor. The skilled person will appreciate that also more than one cover may be used, for example a first plurality of soft sensor elements may be used with a second plurality of covers, wherein the covers of the second plurality of covers each are connected to a subset of soft sensor elements of the first plurality of soft sensor elements.

In the following, preferred embodiments of the soft sensor for measuring a force are described.

In some embodiments, at least a portion of each soft sensor element of the at least one soft sensor element extends into the cover. For example, the cover may comprise one or more recesses into which a portion of the deformable element of the at least one soft sensor element extends. For example, the portion of the soft sensor element that extends into the cover may be an upper portion of the deformable element facing away from the sensor. Further, the at least one element for reacting with the sensor for measuring the force may be located in the portion of the deformable element that extends into the cover. Such an arrangement has the benefit that the means for reacting with the sensor is located within the cover and therefore lateral movement of the means for reacting with the sensor is limited. In some embodiments, the recess may extend through the entire cover, i.e. from the second side of the cover to the first side. In this case, at least a portion of the deformable element extends through the cover.

In some embodiments, the cover and the deformable element of the at least one soft sensor element are connected by an adhesive. The adhesive may also be used in addition to locating the portion of the soft sensor element in a recess at the second side of the cover.

In some embodiments, the cover and the deformable element may be integrally formed from the same material. Preferably, the material may comprise at least one of an elastomer, a polymer, a silicone, a rubber and a vulcanizate. Forming the cover and the deformable elements integrally from the same material may improve longevity of the soft sensor.

In some embodiments, the soft sensor may comprise a support on which the sensor of each of the at least one soft sensor element is located. Preferably, the support is rigid. The support may provide structural stability and ensure that the soft sensor element is located in the exact position that is desired for the force measurement.

The support may comprise a printed circuit board (PCB) and the soft sensor element may be located on the printed circuit board. The printed circuit board may in some embodiments be a flexible printed circuit board. Using a flexible printed circuit board has the advantage that if there is a plurality of soft sensor elements they can be arranged relatively to one another on the support in order to adapt the arrangement of the soft sensor elements to a use case, e.g. the shape of a robotic gripper.

In some embodiments, the soft sensor may further comprise at least one pillar. The pillar may comprise at least one protrusion that extends between the second side of the cover and the support. For example, the pillar may comprise at least one protrusion extending from the second side of the cover in a direction towards the support, at least one protrusion extending from the support in a direction towards the cover or a combination thereof. When no force is applied, the pillar may contact both the second side of the cover and the support or it may only contact one of them. The pillar may be made of a material that is less flexible than the deformable element of the soft sensor elements. The pillar may be made of the same material as the cover or may be made of a different material. The pillar may be formed integrally with the cover from the same material.

The pillar may limit the deformation of the deformable element because it acts against the force deforming the deformable element. For example, if the pillar is connected to the second side of the cover and - when no force is applied - does not contact the support, less force is necessary to push the cover towards the sensor/support initially, but the force increases when the pillar is brought into contact with the support.

In some embodiments, the pillar may be used to allow a pivotal movement of the cover. For example, if two or more soft sensor elements are located on the support and the pillar is located in the space between the two or more soft sensor elements, when there is contact between the support and the pillar - either because there is initial contact or because the cover was pushed towards the support until the pillar contacts the support - the pillar causes a counter-force against a further movement (or deformation) of the cover and cover will pivot towards one of the soft sensor elements.

In some embodiments, the deformable element of the at least one soft sensor element may comprise a cavity between the sensor and the at least one element for reacting with the sensor. This cavity may also be referred to as pocket and may act as free-space into which the deformed material of the deformable element may be displaced when a force is applied. This may lead to an easier deformation and therefore may allow measuring even smaller forces accurately. Further, the cavity may be filled with air or gas. This way, the cavity may have a pressure that affects the way the deformable element can be deformed and thereby affects the elasticity of the deformable element. The deformable element may comprise a vent hole that connects the cavity with the outside. The vent hole may be an opening to prevent pressure build-up in the cavity when a forced is applied. Alternatively, or additionally, the vent hole may be used to alter the pressure in the cavity. Further, the vent hole may be configured to be closed as long as the pressure inside the cavity is below a threshold and may open to allow an equalization of the pressure once the pressure exceeds the threshold. Since the pressure in the cavity increases upon deformation of the deformable element when a force is applied, the pressure inside the cavity is linked to the applied force. By using a vent hole that blocks pressure equalization until the pressure - and thereby the applied force - reaches a threshold, the opening of the vent hole when the threshold exceeds may cause an unsteadiness or rapid change in the measurement signal and may therefore be used as indication of the force exceeding a threshold or as trigger signal.

In some embodiments, in which at least two soft sensor elements are present, the elements for reacting with the sensors of the at least two soft sensor elements are located within the same geometrical plane or the sensors of the at least two soft sensor elements are located within the same geometrical plane. In other words, the elements for reacting with the sensors or the sensors may be aligned in a geometrical plane. An alignment of the sensors may be the case when the detection surfaces of the sensors lie in the same plane and have the same orientation (i.e. the normal directions on the respective detection surfaces are essentially parallel). This may be beneficial for some applications, in which the force is to be measured in a planar arrangement. If the deformable elements of all soft sensor elements have the same height, the respective sensors may be located within the same geometrical plane at the same time as the respective elements for reacting with the sensors are located in the same geometrical plane.

In some embodiments, it is not desired to have the sensors or means for reacting with the sensors aligned in a plane. For example in robotic grippers, it may be desired to adapt the spatial arrangement of the soft sensor elements for reacting with the sensors to the shape or geometry of the robotic gripper. The arrangement in different geometrical planes may, for example, be achieved by using a flexible printed circuit board. Hence, in some embodiments, at least one of the elements for reacting with the sensor of at least one of the at least two soft sensor elements may not be located within the same geometrical plane as the other element for reacting with the sensor of the other of the at least two soft sensor elements, or at least one of the sensors of the at least two soft sensor elements may not be located within the same geometrical plane as the other sensor of the at least one soft sensor elements.

In some embodiments, the sensor may be formed as a semiconductor package, for example as a molded integrated circuit. For example, the semiconductor package can be a flat no-leads package such as a quad flat no-leads (QFN) package or a dual flat no-leads (DFN) package, or a small outline integrated circuit (SOIC) package. The deformable element may be attached to the semiconductor package. This may have the advantage that the sensor is protected from the environment - such as dust and humidity -, which therefore improves longevity and accuracy. Additionally, manufacturing may be simplified because the same sensor may be produced - as a package - for usage in different types of force sensor applications and the semiconductor package can serve as a stable support to receive the deformable element.

The skilled person will appreciate that the features of the preferred embodiments can be combined without departing from the scope of this disclosure.

The abovementioned need is also fulfilled by a robotic finger, which comprises one or more of the aforementioned soft sensors for measuring a force.

### BRIEF DESCRIPTION OF THE DRAWINGS

The following description and the annexed figures set forth in detail certain illustrative aspects of the soft sensor for measuring a force and example operations in a robotic gripper. These aspects are indicative, however, of but a few of the various ways in which the principles of various embodiments can be employed and the described embodiments are intended to include all such aspects and their equivalent.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- FIG. 1: shows a section view of an embodiment example of a soft sensor element that can be used in a soft sensor according to the invention; in the status that is depicted in the figure, no external force is applied to the soft sensor element;
- FIG. 2: shows the section view of the soft sensor element of FIG. 1 with a linear external force applied;
- FIG. 3: shows the section view of the soft sensor element of FIG. 1 with a non-linear external force applied;
- FIG. 4: shows an embodiment of the soft sensor for measuring a force according to the invention;
- FIG. 5: shows an embodiment of the soft sensor for measuring a force according to the invention, the soft sensor having a pillar;
- FIG. 6: shows some embodiments of the soft sensor for measuring a force according to the invention with different configurations of pillars;
- FIG. 7: shows some embodiments of the soft sensor for measuring a force according to the invention, the soft sensor having sensors that are packaged;
- FIG. 8: shows an embodiment of the soft sensor for measuring a force according to the invention, the soft sensor having soft sensor elements with a cavity in the deformable element;
- FIG. 9: shows some embodiments of the soft sensor for measuring a force according to the invention, the soft sensor having a single soft sensor element;
- FIG. 10: shows an embodiment of the soft sensor for measuring a force according to the invention, the cover of the soft sensor comprising a two-part configuration;
- FIG. 11: shows the application of a force to an embodiment of the soft sensor for measuring a force according to the invention;
- FIG. 12: shows an embodiment of the soft sensor for measuring a force according to the invention, the soft sensor being configured to be used in combination with a robotic finger.

### DETAILED DESCRIPTION

The following detailed description refers to the accompanying figures that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

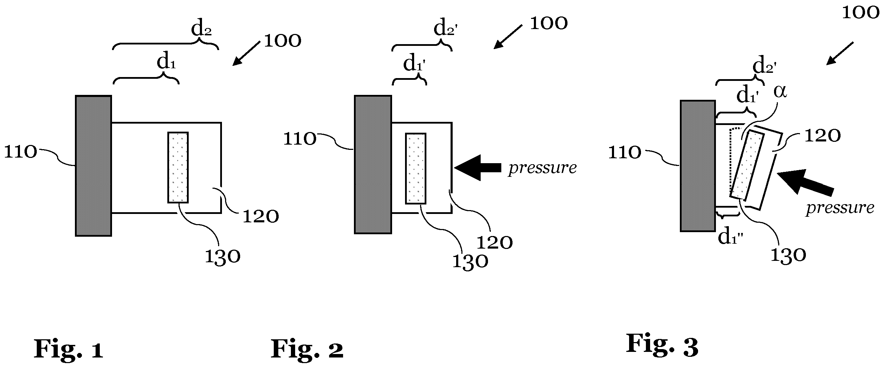

Figure 1 depicts a section view of a soft sensor element 100 according to an embodiment example of the invention. The soft sensor element 100 comprises a sensor 110, a deformable element 120, and an element 130 for reacting with the sensor 110. For example, the deformable element 120 may comprise at least one of an elastomer, a polymer, a rubber and a vulcanizate. The deformable element 120 may also comprise a flexible element, an elastic element or a flexible structure. The flexible element or the flexible structure may be made of metal. For example, the flexible element or the flexible structure may be a made of metallic flexible beams. In the here shown embodiment example, the element 130 is fully embedded in the deformable element 120. Fully embedded means that the deformable element 120 is completely surrounding the element 130, which means all surfaces of the element 130 are in contact with the deformable element 120. It can also be said that the element 130 is enveloped by the material of the deformable element 120. The deformable element 120 is deformable by applying an external force. The applied external force may cause the deformable element 120 to be compressed such that the distance between the element 130 and the sensor 110 changes. This change in distance can be detected by the sensor 110. For example, if the element 130 is a magnet and the sensor 110 is a magnetic sensor, then the reduction in distance between the element 130 and the sensor 110 causes the sensor to detect a different magnetic field, e.g. a different magnetic field strength and/or orientation as compared to before the deformation. Hence, from a change in the measured physical unit, it can be deducted how much the deformable element 120 is deformed. The person skilled in the art will however notice that also other types of sensor 110/element 130 combinations can be used for measuring the amount of distance the deformable element 120 has been compressed.

Each individual deformation of the deformable element 120 corresponds to a different applied external force, which in turn is associated with a respective physical measurement obtained by the sensor 110. Hence, a correlation between applied external force values and corresponding measurement values of the sensor 110 exists. This correlation can be determined during an initial calibration step of the sensor 110 or can be predetermined by knowing the bulk modulus and/or a shear modulus of the deformable element 120. The correlation itself can, for instance, be established as a look-up table including external force values and their associated sensor readings. The correlation between applied external force values and corresponding measurement values of the sensor 110 could be established using a model trained by machine learning. A person skilled in the art also knows other ways to establish the respective correlations, all of which are encompassed hereby. Once an actual measurement of the sensor 110 is obtained, the look-up table can be used to infer an estimate for the external force. However, by knowing the bulk modulus and/or the shear modulus of the deformable element 120 also an algorithm can be used, which outputs the actual force applied in respect to the amount of deformation by ease of calculation. The algorithm may be a non-linear model, which defines the actual force as a non-linear function of the measurement values of the sensor 110. The algorithm or the correlation may be implemented inside an integrated circuit (IC) containing the sensor 110, or outside the integrated circuit containing the sensor 110, or partially inside the integrated circuit containing the sensor 110 (e.g. for calculating the position of the element 130 from the sensor signal), and partially outside the integrated circuit containing the sensor 110 (e.g. for inferring the force from the displacement of the element 130). The sensor 110 may be configured to provide dual sensing, which allows detection of linear forces as well as shear forces, for example a linear force in the direction of the external force and shear forces in one direction or two orthogonal directions in the plane perpendicular to the direction of the external force. The correlation or the algorithm may provide a direct link between the applied external force values and the measurement values of the sensor 110. Optionally, the correlation or the algorithm may compute the displacement of the element 130 as an intermediate step. In this case, a first correlation or a first algorithm determines the position of the element 130 from the measurement values of the sensor 110, and a second correlation or a second algorithm determines the applied external force value from the position of the element 130. Thus, in this case, the determining the position of the element 130 acts as an intermediate step.

The element 130 embedded within the deformable element 120 has in the here shown embodiment example a distance, d₁, from the sensor 110, which is smaller than the distance, d₂, of the second end of the deformable element 120 from the sensor 110.

In a not limiting sense, the distance, d₁, of the element 130 from the sensor 110 may be 3mm, the distance, d₂, of the second end of the deformable element 120 from the sensor may be 4mm A person skilled in the art knows that these dimensions are only named for illustrative purposes and shall not be understood to be limiting if not explicitly mentioned.

Figure 2 shows a section view of the soft sensor element 100 of Figure 1 with an applied external force ('*pressure*'). The applied external force can be uniform, i.e., constant over a surface of application of the force. However, the applied external force can also be non-uniform, i.e., varying over the surface of application of the force. This variation of the force over the surface of application may be linear or non-linear. In other words, each point on the surface of application of the force may be assigned a different force value, which is related to the neighboring force values according to a linear or a non-linear relationship. In the shown example, the external force is uniform over the surface of the deformable element 120 and applied perpendicularly to the surface of the sensor 110. The applied external force compresses the deformable element 120. This causes the distance, d₂, of the second end of the deformable element with respect to the sensor 110 to be reduced to a shorter distance, d_{2'}. Due to the fact that the element 130 is embedded in the deformable element 120 also the distance, d₁, of the element 130 to the sensor 110 is reduced to a shorter distance, d_{1'}.

The sensor 110 is configured to detect the change of distance, d₁ to d_{1'}, by reacting with the element 130. If the sensor 110 is a magnetic sensor and the element 130 is a magnet, then the lower distance between the sensor 110 and the element 130 causes the sensor 110 to detect a higher magnetic field strength, since it is proportional to the distance. The change in magnetic field strength as such allows to conclude the force applied to the deformable element 120. In some cases, if the sensor 110 is a magnetic sensor, it is possible that the sensor 110 detects, additionally or alternatively to the magnetic field strength, a change of orientation of the magnetic field strength vector, i.e., of one or more angles assigned to the magnetic field vector. In this case, the magnetic sensor may be located at an offset with respect to the axis of the magnet. Whereas here only a one-dimensional distance measurement and as such a perpendicularly applied force is described, the person skilled in the art will notice that the element 130 may also be inclined at an angle as shown in Figure 2b.

In Figure 3, the external force ('*pressure*') is applied uniformly but not perpendicular to the surface of the sensor 110. Hence, the applied external force deforms the deformable element 120 in a direction not perpendicular to the surface of the sensor 110. This causes the distance, d₁, of the element 130 to the sensor 110 to be changed in a non-homogeneous way. For example, the upper end of the element 130 is moved to a larger distance, d_{1'}, but the lower end of the element 130 is moved to a lower distance, d_{1"}. Since the distances d_{1'} and d_{1"} are different if a non-linear force is applied, the element 130 is tilted by a non-zero angle α with respect to the sensor 110. Thus, with a non-perpendicular external force the element 130 is not only translated, but also rotated. The sensor 110 is adapted to detect the change of the angle α by the reaction with the element 130. If the sensor 110 is a magnetic sensor and the element 130 is a magnet, the different angle α between the sensor 110 and the element 130 causes the sensor 110 to detect a different magnetic field, since the orientation of the magnetic field lines of the magnet 130 has been changed with respect to the sensor 110. It could also be said that the rotation of the element 130 by the angle α causes the sensor 110 to perceive a rotated three-dimensional magnetic field from the element 130. Under rotations, the absolute magnetic field strength does not change but the orientation of the magnetic field vector in space is changed. Hence, the sensor 110 perceives different magnetic fluxes as compared to no rotation of the element 130, since the projections of the magnetic field vector onto the surfaces, over which the sensor 110 measures the magnetic fluxes, are different. The change in the measured magnetic fluxes allows to infer the change of the position of the element 130. The positional change of the element 130 is uniquely linked to the force exerted onto the deformable element 120. Hence, if a non-perpendicular force is applied to the deformable element 120, a rotation of the element 130 could be used to determine the force applied to the deformable element 120.

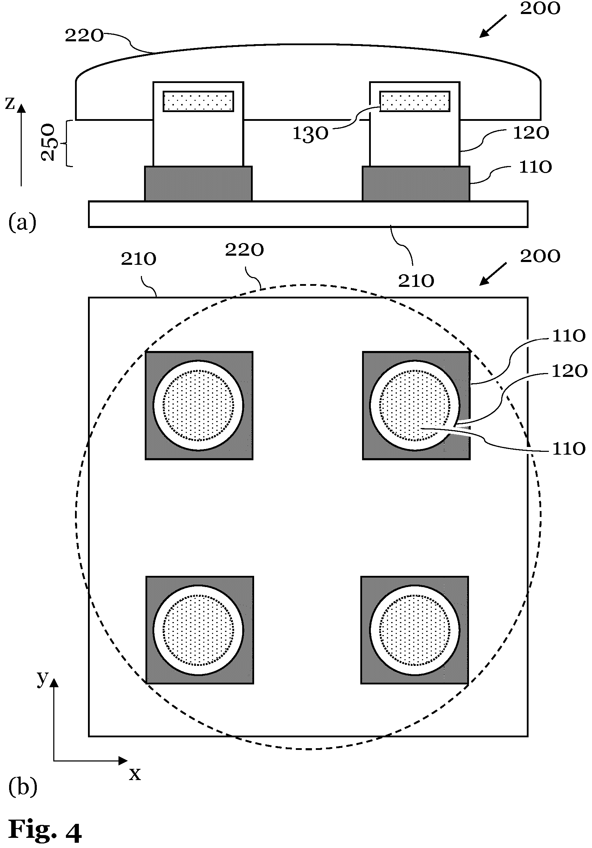

Figure 4 shows an embodiment of the soft sensor for measuring a force according to the invention. The soft sensor for measuring a force is generally shown at 200. Figure 4 (a) shows a side view and Figure 4 (b) shows a top view.

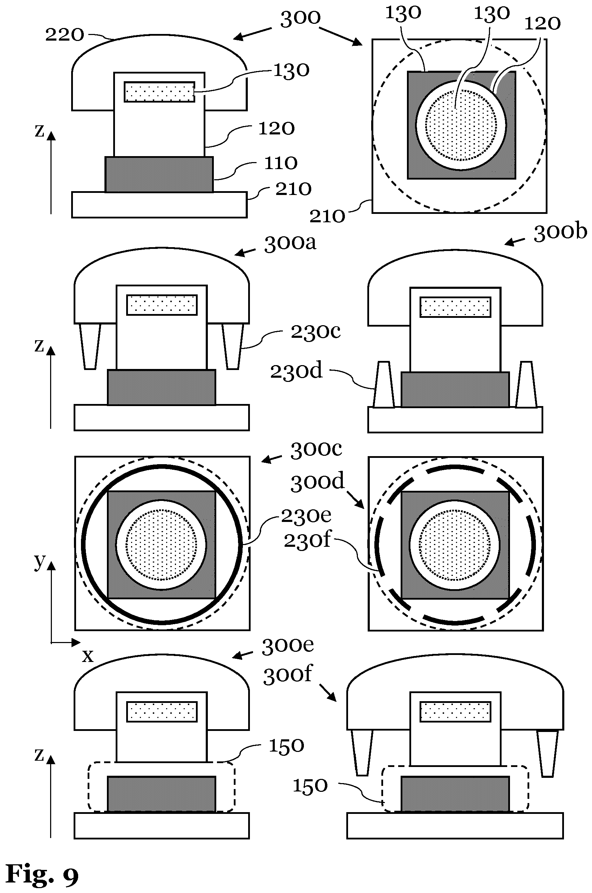

The soft sensor 200 comprises a plurality of soft sensor elements. Without loss of generality, four soft sensor elements are shown, which are arranged in a square. The skilled person will be aware that another number of soft sensor elements (including a single soft sensor element as illustrated in figure 9) and other arrangements may be used without departing from the scope of this disclosure. Each soft sensor element comprises a sensor 110, a deformable element 120 and an element 130 for reacting with the sensor. The soft sensor elements may be similar to the soft sensor element 100 illustrated in figure 1. Further, the plurality of soft sensor elements may be located on a support 210. The support may be a printed circuit board as illustrated in figure 4. However, in some embodiments, the plurality of soft sensor elements may be located on a different type of support 210, which may generally be referred to as base. Additionally, the printed circuit board may itself be located on a base. This may have the advantage that a flexible printed circuit board can be used to adapt the arrangement of the soft sensor elements to a particular geometry of a technical application and once the arrangement has been adapted, it can be fixed by placing the printed circuit board on the base.

Further, the soft sensor 200 comprises a cover 220. The cover 220 has two opposing sides. The top side in the z-direction as shown in figure 4 (a), i.e. the side of the cover 220 facing away from the support 210 is a contact portion of the soft sensor 200, i.e. the side of the cover 220 to which the force to be measured is applied. The opposing side, i.e. the side of the cover 220 that faces the support 210, may be referred to as backside of the cover 220. The deformable elements of the plurality of soft sensor elements are connected to the backside of the cover 220. In the embodiment example illustrated in the figure, the cover 220 has recesses into which the deformable elements 120 of the plurality of soft sensor elements are extending. Due to this arrangement, the cover 220 laterally fixes the positions of the deformable elements of the plurality of soft sensor elements relatively to one another. In the illustrated example, the lateral directions are the directions in x- and y-direction as illustrated in figure 4 (b).

As illustrated in figure 4 (a), there is a gap 250 between the backside of the cover 220 and the sensor 110 of each of the plurality of soft sensor elements. This gap 250 acts as a free space into which the deformable elements 120 of each of the plurality of soft sensor elements can extend when said deformable elements are deformed when a force is applied to the contact portion of the cover 220, which pushes the cover 220 down towards the sensors 110 in negative z-direction. Since the deformable elements 120 are enabled to extend laterally, i.e. in x- and y-direction, when the force is applied, the deformable elements 120 can be easier deformed compared to the situation in which the deformable elements were enclosed laterally. This way, smaller forces can be measured more accurately because even small forces lead to displacement of the element 130 for reacting with the sensor 110 upon deformation of the deformable element 120. By selection of the material of the deformable element 120 that has an appropriate elasticity, the sensor 200 may be configured to have a suitable sensitivity for a particular application.

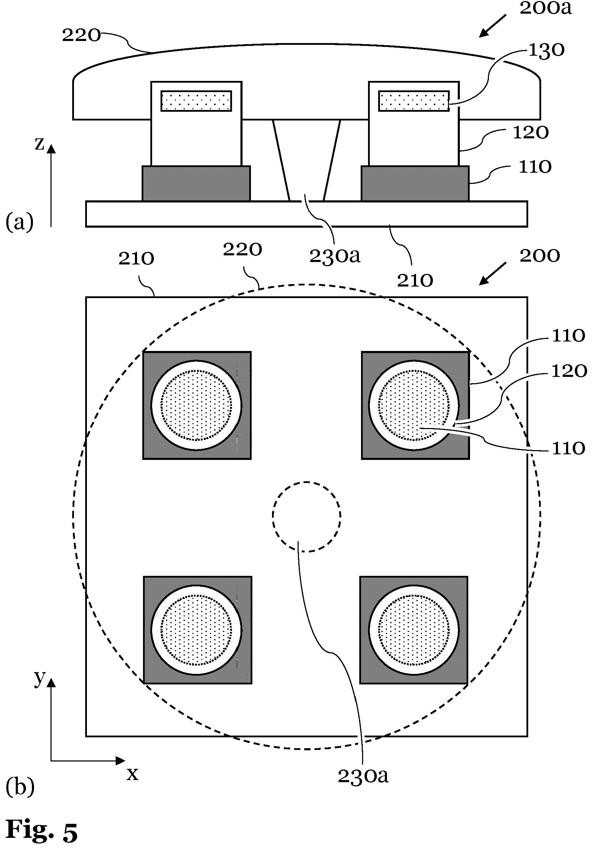

Figure 5 shows an embodiment of the soft sensor for measuring a force according to the invention, the soft sensor having a pillar. The soft sensor for measuring a force is generally shown at 200a. Figure 5 (a) shows a side view and Figure 5 (b) shows a top view. The soft sensor 200a is generally similar to the soft sensor 200 as illustrated in figure 4 and will therefore not be described in every detail. Elements having same reference signs between the figures in this application are similar.

In addition to the features of soft sensor 200, soft sensor 200a illustrated in figure 5 comprises a pillar 230a. The pillar 230a may have a conical shape as illustrated in figure 5, but could also have another shape, such as a circular column or a square column, among others. The pillar 230a may be arranged between the plurality of soft sensor elements. In a preferred embodiment, which is illustrated in figure 5, four soft sensor elements are arranged in a square and the pillar 230a is located in the center of the square (see figure 5 (b)). The pillar 230a may as such have a similar distance to all of the soft sensor elements. In this embodiment, the cover 220 may pivot around the center of the square where the pillar is located because the pillar 230a will counteract the applied force. While in some embodiments, the pillar 230a may also be deformable by the force applied to the contact portion of the cover 220, which may lead to the cover 220 being pushed down towards the sensors 110 when higher forces are applied, smaller forces will lead to a pivotal motion of the cover 220 towards one of the sides or corners of the square defined by the soft sensor elements. In such a case, selectively analyzing the measurement data of each sensor may allow to determine the location where the force is applied to the cover 220 of the soft sensor or a direction in which the force is applied.

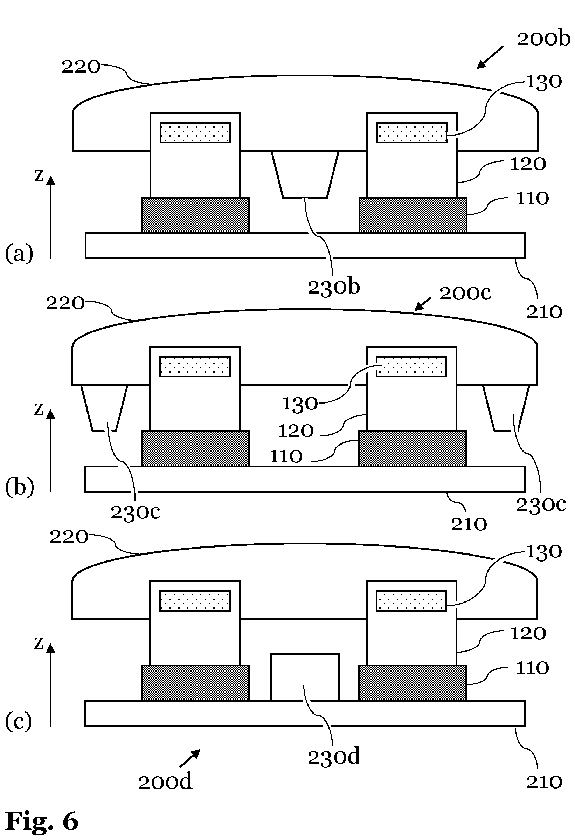

Figure 6 shows some embodiments of the soft sensor for measuring a force according to the invention with different configurations of pillars. Figures 6 (a) to (c) essentially show soft sensors 200b, 200c, 200d, respectively, that are similar to the embodiment example illustrated in figure 5. This means all soft sensors 200b, 200c, 200d illustrated in figure 6 comprise at least one pillar 230b, 230c, 230d.

In figure 6 (a), the pillar 230b is a protrusion extending from the backside of the cover 220 towards the support 210 but compared to the embodiment 200a in figure 5 (a) does not contact the support 210 when no force is applied to the contact portion of the cover 220. As a consequence, the soft sensor 200b may behave similar to the embodiment 200 of figure 4 when the force does not exceed a threshold - or in other words when the force does not cause the deformation of the deformable elements to exceed a certain extend - and the soft sensor 200b may behave similar to the embodiment 200a of figure 5 when the force exceeds said threshold. This embodiment may be used to improve the sensitivity of the soft sensor for particular ranges of applied forces.

In figure 6 (b), two pillars 230c are shown, which are not located in the center of the soft sensor elements but on the outside of the cover 220. Here it can also be said that the pillars 230c are located at the circumference of the cover 220, namely on the side facing the support 210. In some cases, the pillars 230c may form a closed ring around the soft sensor elements, while in other cases multiple pillars 230c are used. If the pillar 230c surrounds the soft sensor elements over a large distance, the pivotal movement of the cover 220 may be avoided. At the same time, different sensitivity for different ranges of applied forces as described above in combination with figure 6 (a) may still apply.

As illustrated in figure 6 (c), the pillar 230d may also have the form of a protrusion extending from the support 210 - e.g. the printed circuit board or a base on which the printed circuit board may be located. Also, the pillar 230d may have a different shape, e.g. circular column or a square column.

As can be seen from the different examples of the pillars 230a, 230b, 230c, 230d in figures 5 and 6, it is possible to adapt the function and/or the sensitivity of the soft sensor by adapting the shape of the at least one pillar. The skilled person will appreciate that the different examples are shown for illustrative purposes and additional examples are also possible even when they are not explicitly shown. For example, the configuration in figure 6 (b) of having pillars 230c surrounding the plurality of soft sensor elements could also be achieved with pillars located at the support 210 (e.g. printed circuit board or base). Similarly, the conical pillars in figures 5 and 6 (a), (b) could be replaced with other shapes, the shape of pillar 230d in figure 6 (d) could be replaced with a conical shape, and so on.

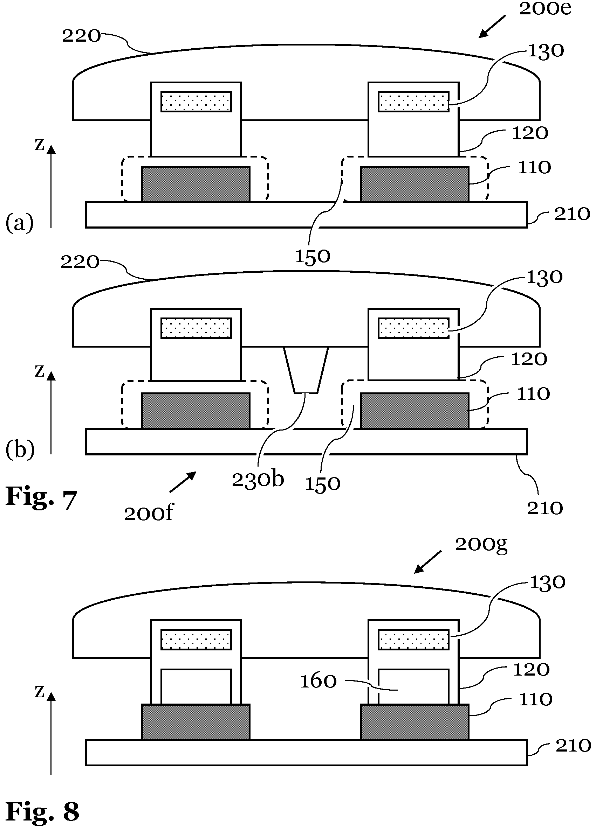

Figure 7 shows some embodiments of the soft sensor for measuring a force according to the invention, the soft sensor having sensors (e.g. CMOS integrated ciruits) that are packaged. The soft sensor 200e in figure 7 (a) is similar to the soft sensor 200 illustrated in figure 4, with the exception that each of the plurality of sensors is packaged in a semiconductor package 150. The semiconductor package 150 may comprise electrical terminals (e.g. leads) connectable to the support 210. The deformable element 120 may be attached to the semiconductor package 150. The soft sensor 200f in figure 7 (b) is similar to the soft sensor 200a illustrated in figure 5, with the exception that each of the plurality of sensors is packaged in a semiconductor package 150. Packaging the sensors in a semiconductor package has the advantage that the sensors, will be protected from the environment, e.g. dust, which may improve longevity of the plurality of soft sensor elements. The skilled person will appreciate the more than one sensor may be packaged in a semiconductor package.

Figure 8 shows an embodiment of the soft sensor for measuring a force according to the invention, the soft sensor having soft sensor elements with a cavity in the deformable element 120 or formed between the deformable element 120 and the sensor 110. The soft sensor 200g of figure 8 is similar to the soft sensor 200 shown in figure 4 with the exception that the deformable element 120 of the soft sensor elements comprises a cavity 160. The cavity may act as free space into which the deformable element may extend when it is deformed due to the force applied to the contact portion of the cover 220. The cavity 160 may also referred to as a pocket. The cavity 160 may be filled with air or gas. Furthermore, the cavity 160 may comprise a vent hole that can be used for pressure equalization of the cavity 160.

The skilled person will appreciate that embodiments with a cavity 160 in the deformable element 120 may be combined with embodiments having a pillar 230a-d even though this is not explicitly shown in the figures.

Figure 9 shows some embodiments of the soft sensor for measuring a force according to the invention, the soft sensor having a single soft sensor element. Similarly to the embodiments illustrated in figures 4 to 8, each showing a plurality of soft sensor elements, the soft sensor may only comprise a single soft sensor element. The individual components of figure 9 show examples of such configurations.

In the top row of figure 9, a soft sensor 300 is illustrated in a configuration similar to the soft sensor 200 in figure 4, wherein again a side view (left side) and a top view (right side) are illustrated.

In the second row of figure 9, soft sensors 300a, 300b having pillars 230c, 230d are illustrated, wherein the pillars are arranged around the soft sensor element similarly to what is shown in figure 6 (b). In the third row of figure 9, this aspect is further illustrated by the pillar 230e forming a closed ring around the soft sensor element in the example on the left-hand side and by the pillar 230f forming a discontinuous ring around the soft sensor element in the example on the right-hand side.

Lastly, the fourth row of figure 9 shows on the left-hand side an example of a soft sensor 300e comprising a packaged sensor and on the right-hand side an example of a soft sensor 300f comprising a packaged sensor and at least one pillar added to the cover. In both examples, a deformable element is attached on the top surface of the semiconductor package 150.

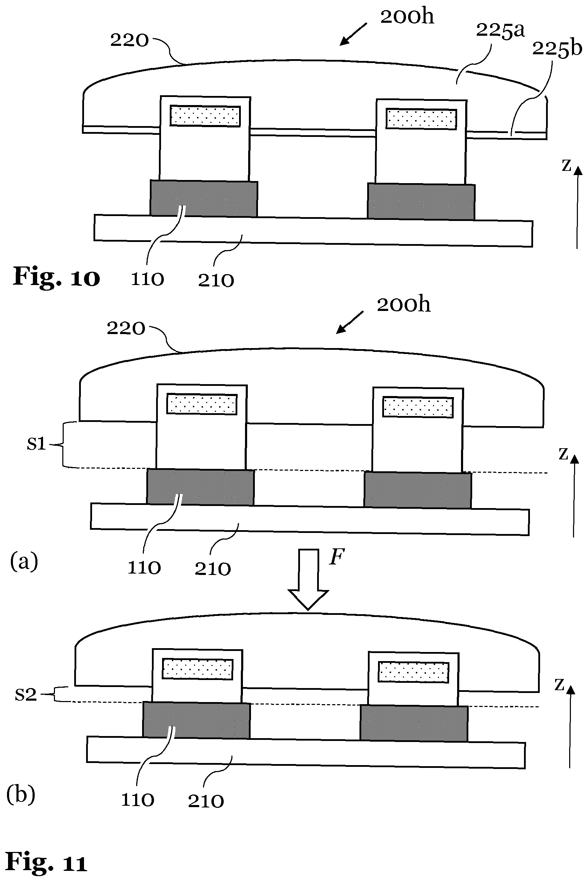

Figure 10 shows an embodiment of the soft sensor for measuring a force according to the invention, the cover of the soft sensor comprising a two-part configuration. The soft sensor 200h illustrated in figure 10 is generally similar to the soft sensor 200 illustrated in figure 4 with the exception that the cover 220 comprises a two part form of a first portion 225a and a second portion 225b. The second portion 225b may a layer that is added to the backside of the cover 220. The first portion 225a and the second portion 225b may have different elasticities. This may be used to provide a soft sensor having different sensitivities for different ranges of forces applied to the cover. For example, the force may be measured in the same manner as for soft sensor 200 of figure 4 for as long as the cover 220 does not contact the sensor 110. Once the second portion 225b of the cover 220 contacts the sensor 110, the applied force will also cause a deformation of the second portion 225b, which may affect the displacement of the element for reacting with the sensor 110 in a manner that a higher force is necessary to achieve a certain amount of displacement. The more the second portion 225b of the cover 220 is compressed, the more the applied force will affect the first portion 225a of the cover 220, which may also get deformed, thereby further affecting the displacement of the element for reacting with the sensor 110. Such a configuration may be used to adapt the soft sensor to particular use cases.

Furthermore, the skilled person will appreciate that the two part configuration of the cover 220 may also be employed for any of the embodiment examples illustrated in figures 4 to 9.

Figure 11 shows the application of a force to an embodiment of the soft sensor for measuring a force according to the invention. In figure 11 (a) no force is applied to the contact portion of the cover 220. In this case, the gap between the sensor 110 and the cover 220 is equal to the distance s1. Once a force is applied, as is illustrated in figure 11 (b), the cover 220 is pushed down towards the sensor 110, thereby reducing the gap, which is not equal to a distance s2, with s1 > s2.

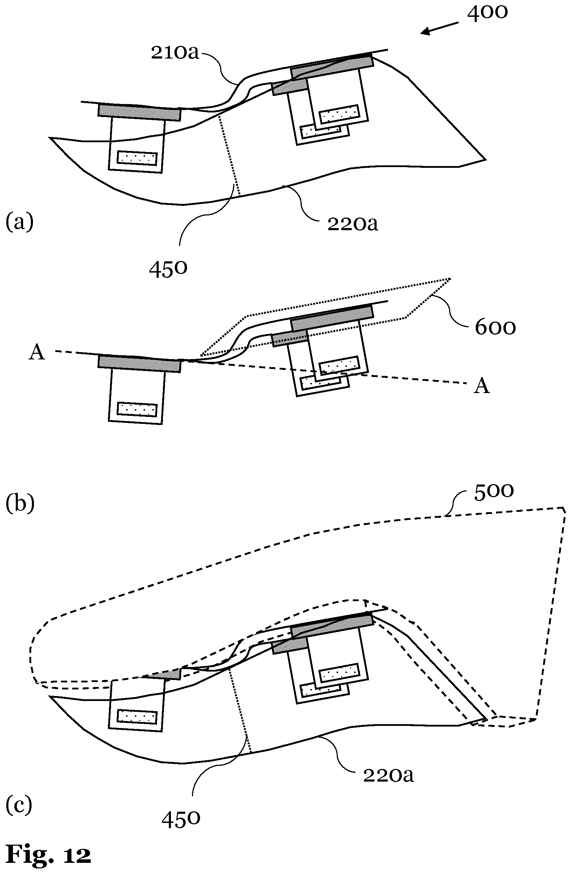

Figure 12 shows an embodiment of the soft sensor for measuring a force according to the invention, the soft sensor being configured to be used in combination with a robotic gripper in form of a robotic finger.

In figure 12 (a), a soft sensor 400 according to the invention is illustrated. The soft sensor 400 may be similar to any of the soft sensors illustrated in figures 4 to 11. The soft sensor 400 comprises a printed circuit board 210a, which is flexible, thereby allowing to spatially arrange the soft sensor elements of the sensor 400, which are arranged on the flexible printed circuit board 210a, relatively to one another. In the illustrated example, as illustrated in figure 12 (b), a first soft sensor element may have its sensor aligned in a first geometrical plane that extends along line A-A in the figure, while two other soft sensor elements may have their sensors aligned in a second geometrical plane that is different from the first geometrical plane and is oriented as illustrated by element 600. The relative orientation in which the soft sensor elements are arranged may depend on the technical application, in particular the geometrical specifications of the element on which the soft sensor is used, e.g. a robotic finger which in the here shown embodiment example has the form similar to a human finger such that it can also be said that the robotic gripper is a humanoid finger.

In some cases, when the orientations of the soft sensor elements are different, it may be useful to separate the cover 220a into sections. This may be a full separation by employing individual sections or this may be achieved by a flexible layer that connects the sections but allows a separate movement of the cover sections to at least some extend. This is illustrated by dashed line 450 in figures 12 (a) and (c).

Figure 12 (c) illustrated a robotic finger 500 in dashed lines to which the soft sensor 400 of figures 12 (a) and (b) is attached. As illustrated, the cover 220a may resemble the contact surface of the robotic finger to which the soft sensor is attached.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims.

## Claims

1. A soft sensor for measuring a force, comprising:
at least one soft sensor element (100), each of the at least one the soft sensor elements (100) comprising:
a sensor (110),
a deformable element (120), wherein the deformable element (120) is deformable by the force,
at least one element (130) for reacting with the sensor (110) for measuring the force by a deformation of the deformable element (120), wherein the deformable element (120) extends at least partially between the sensor (110) and the at least one element (130); and
a cover (220, 220a) having two opposing sides, wherein a first side of the two opposing sides comprises a contact portion to which the force is to be applied and a second side of the two opposing sides is connected to a portion of the deformable elements (120) of each of the at least one soft sensor element (100),
wherein there is a gap (250) between the second side of the cover (220, 220a) and the sensors (110) of the at least one soft sensor element (100) when no force is applied.

2. The soft sensor according to claim 1, wherein at least a portion of each soft sensor element (100) of the at least one soft sensor elements (100) extents into the cover (220, 220a).

3. The soft sensor according to any of the aforementioned claims, wherein the cover (220, 220a) comprises one or more recesses in which at least a portion of the deformable element (120) of the at least one soft sensor element (100) is located.

4. The soft sensor according to any of the aforementioned claims, wherein the cover (220, 220a) and the deformable element (120) of the at least one soft sensor element (100) are connected by an adhesive.

5. The soft sensor according to claim 1, wherein the cover (220, 220a) and the deformable element (120) of the at least one soft sensor element (100) are integrally formed from the same material.

6. The soft sensor according to any of the aforementioned claims, further comprising a support on which the sensor (110) of each of the at least one soft sensor element (100) is located.

7. The soft sensor according to claim 6, wherein the support comprises a printed circuit board (210, 210a).

8. The soft sensor according to claim 7, wherein the printed circuit board (210, 210a) is a flexible printed circuit board.

9. The soft sensor according to any of claims 6 to 8, further comprising at least one pillar (230, 230a-f), wherein the at least one pillar (230, 230a-f) comprises at least one protrusion extending from the second side of the cover (220, 220a) in a direction towards the support, at least one protrusion extending from the support in a direction towards the cover (220, 220a) or a combination thereof.

10. The soft sensor according to claim 9, wherein the at least one pillar (230, 230a-f) is made of a material that is less flexible than the deformable element (120) of the at least one soft sensor element (100).

11. The soft sensor according to any of the aforementioned claims, wherein the deformable element (120) of the at least one soft sensor element (100) forms a cavity (160) between the sensor (110) and the at least one element (130) for reacting with the sensor (110).

12. The soft sensor according to any of the aforementioned claims, wherein the at least one soft sensor element (100) comprises at least two soft sensor element (100); and
wherein one of the following applies:
the elements (130) for reacting with the sensor (110) of the at least two soft sensor elements (100) are aligned within the same geometrical plane, or
the sensors (110) of the at least two soft sensor elements (100) are aligned within the same geometrical plane.

13. The soft sensor according to any of the claims 1 to 11, wherein the at least one soft sensor element (100) comprises at two soft sensor element (100); and
wherein one of the following applies:
at least one of the elements (130) for reacting with the sensor (110) of the at least two soft sensor elements (100) is not aligned within the same geometrical plane as the other means for reacting with the sensor (110) of the at least two soft sensor elements (100), or
at least one of the sensors (110) of the at least two soft sensor elements (100) is not aligned within the same geometrical plane as the other sensors (110) of the at least two soft sensor elements (100).

14. The soft sensor according to any of the aforementioned claims, wherein the sensor (110) of at least one of the at least one soft sensor element (100) is formed as a semiconductor package.

15. A robotic finger comprising one or more soft sensors according to any of the aforementioned claims.
